# EUROPÄISCHE PATENTSCHRIFT

(11) **EP 0 743 164 B1**
(45) Veröffentlichungstag und Bekanntmachung des Hinweises auf die Patenterteilung: **21.02.2001**
(21) Anmeldenummer: 96106150.4
(22) Anmeldetag: 19.04.1996
(51) Int. Cl.: B29C 65/10, F24H 3/04

(54) **Verfahren und Vorrichtung zum Heissgasschweissen von Kunststofffolien**
Process and apparatus for hot gas welding of plastics
Procédé et appareil pour le soudage au gaz chaud de matières plastiques

(30) Priorität: 15.05.1995 DE 19517752; 15.11.1995 DE 19542488
(43) Veröffentlichungstag der Anmeldung: 20.11.1996
(73) Patentinhaber: Hainsberger Metallwerk GmbH, 01705 Freital (DE)
(72) Erfinder: Toss, Ramon, 35418 Alten-Buseck (DE)
(74) Vertreter: Jochem, Bernd, Dipl.-Wirtsch.-Ing.

(56) Entgegenhaltungen:
- DE-A- 1 939 571
- DE-A- 2 845 652
- DE-A- 3 740 426
- DE-U- 1 992 254
- FR-A- 1 072 177
- FR-A- 1 093 844
- FR-A- 1 207 226
- FR-A- 2 344 453
- GB-A- 1 200 303
- GB-A- 1 309 941
- US-A- 3 311 525
- US-A- 3 606 727
- US-A- 4 473 432
- US-A- 4 506 146
- DATABASE WPI Section Ch, Week 8335 Derwent Publications Ltd., London, GB; Class A32, AN 83-752161 XP002043119 & SU 969 797 A (NONWOVEN TEXTILE) , 30.Oktober 1982
- DATABASE WPI Section PQ, Week 9110 Derwent Publications Ltd., London, GB; Class Q31, AN 90-314589 XP002029484 , 19.Februar 1991 & US 4 993 209 A (M. HALOILA) 19.Februar 1991

## Beschreibung

Die Erfindung betrifft ein Verfahren zum Verschweißen von Kunststoffolien mit Heißgas, das in einem rohrförmigen Heizleiter durch elektrischen Strom erwärmt und durch eine oder mehrere Auslaßöffnungen in der Umfangswand eines Rohrkörpers auf eine in einem bestimmten Abstand zum Rohrkörper angeordnete Kunststoffolie geblasen wird sowie eine zur Durchführung des Verfahrens geeignete Vorrichtung.

Ein derartiges Verfahren und eine entsprechende Vorrichtung sind in der US-A-3,606,727 beschrieben. Dabei durchströmt Luft zunächst einen am Umfang geschlossenen, rohrförmigen Heizleiter, wobei sie erwärmt wird. Eine Temperaturregelung ist nicht vorgesehen. Die erwärmte Luft strömt danach über eine Verbindungsleitung zu einem ausschließlich als Düse dienenden Rohrkörper mit Luftauslaßöffnungen in seiner Umfangswand, an denen die zu verschweißenden Kunststoffolien vorbeigeführt werden.

Bei anderen bekannten Verfahren wird die Luft zum Erwärmen über Heizkörper mit elektrisch beheizten Drahtspiralen geleitet. Die Temperatur der solchermaßen erzeugten Heißluft unterliegt jedoch schwer korrigierbaren Schwankungen, da die Regelung wegen der großen Masse träge reagiert, und der Energiebedarf dieses Verfahrens ist verhältnismäßig hoch, weil man wegen der langen Anheizzeit den Luftstrom ständig strömen läßt.

Es ist weiterhin aus der GB 1.309.941 A und der US 3,311,525 A bekannt, mit einer Klebeschicht versehenen Karton bzw. thermoplastische Folien mittels eines an sie angenäherten, stromdurchflossenen Heizkörpers auf Klebe- bzw. Schweißtemperatur zu erwärmen. Damit der Kleber bzw. die Folien nicht in direkte Berührung mit dem Heizkörper kommen und daran festkleben, hat er die Form eines hohlen, porösen Metallkörpers, dessen Hohlraum mit einem Druckfluid beaufschlagt wird, das durch die Poren austritt und eine als Abstandhalter bzw. Polster dienende dünne Schicht zwischen dem Heizkörper und dem zu erwärmenden Material bildet. Die Erwärmung des zu verklebenden bzw. zu verschweißenden Materials findet dabei zu einem wesentlichen Teil über die Oberfläche des Heizkörpers durch Strahlungswärme statt. Außerdem besteht der poröse Heizkörper aus normalem Heizleitermaterial mit im wesentlichen konstantem Temperaturkoeffizienten, denn er wird durch eine externe Steuerung mit Strom versorgt. Eine Änderung seiner Temperatur, z.B. durch Änderung der Umgebungstemperatur oder Schwankungen des Druckfluidstroms, bewirkt also nicht unmittelbar eine Anpaßung des Heizstroms.

Sogenannte Heißleiter, deren Widerstand mit zunehmender Temperatur abnimmt, oder Leiter mit positivem Temperaturkoeffizienten, deren Widerstand mit zunehmender Temperatur deutlich ansteigt, werden bisher nur für Heizdrähte verwendet, vgl. US 4,506,146 A. Bei Anwendungen, wo ein in seiner Stärke in der Praxis niemals ganz gleichmäßiger Luftstrom erwärmt werden sollte, wie z.B. gemäß DE 2 845 652 A1, werden solche Heißleiter lediglich als Luftmengenmesser eingesetzt, um dann je nach gemessener Luftmenge den Heizstrom eines stromabwärts angeordneten Heizelements zu steuern. Auch für diese Heißgas-Temperatursteuerung gelten jedoch die obengenannten Mängel der trägen Reaktion, Ungenauigkeit und Unwirtschaftlichkeit.

Die Aufgabe der Erfindung besteht darin, ein Verfahren der eingangs bezeichneten Art zu schaffen, bei welchem die Temperatur des Heißgases sehr genau regelbar ist und das einen günstigen Wirkungsgrad aufweist.

Erfindungsgemäß wird diese Aufgabe bei dem Verfahren der eingangs genannten Art dadurch gelöst, daß der elektrische Strom durch den mit einer oder mehreren Auslaßöffnungen versehenen Rohrkörper geleitet wird und die Stromstärke in Abhängigkeit von dessen sich mit der Temperatur ändernden Widerstand gesteuert wird, wobei der Rohrkörper als Temperaturfühler dient.

Mit Hilfe des vorgeschlagenen Verfahrens, bei dem der Rohrkörper unmittelbar selbst einerseits als Heizelement für das Gas, andererseits auch als Temperaturfühler dient, kann die Temperatur des Rohrkörpers und des Gases sehr genau erfaßt und eingestellt werden. Diese Genauigkeit resultiert daraus, daß sich der Widerstand des Rohrkörpers mit Hilfe elektronischer Schaltungen sehr exakt erfassen läßt. Weil außerdem wegen der geringen Masse die Anheizzeit und Reaktionszeit der Regelung sehr kurz sind, ergeben sich auch nur sehr geringe Schwankungen in der Temperatur des austretenden Gasstroms, und der Wirkungsgrad wird verbessert.

Zweckmäßigerweise wird die Kunststoffolie an den Auslaßöffnungen des Heißgases vorbeigeführt, wodurch sich ein kontinuierlicher Schweißvorgang ergibt. Im Einzelfall besteht auch die Möglichkeit, mit einem gepulsten Gasstrom zu arbeiten.

Zur Durchführung des Verfahrens nach Anspruch 1 wird eine Vorrichtung vorgeschlagen, die in Übereinstimmung mit der US-A-3,606,727 einen über elektrische Anschlüsse an eine Stromquelle angeschlossenen und mit einem Gaseinlaß versehenen, rohrförmigen Heizleiter sowie eine oder mehrere in der Umfangswand eines Rohrkörpers angeordnete Auslaßöffnungen aufweist. Erfindungsgemäß sind bei dieser Vorrichtung die elektrischen Anschlüsse an den Enden des mit einer oder mehreren Auslaßöffnungen versehenen Rohrkörpers angeordnet und die Stromstärke ist in Abhängigkeit von dessen sich mit der Temperatur ändernden elektrischen Widerstand steuerbar, wobei der Rohrkörper einen Temperaturfühler bildet.

Vorteilhafte Weiterbildungen der Erfindung sind Gegenstand der jeweiligen, abhängigen Ansprüche.

Der Rohrkörper kann verschiedene Querschnittsformen aufweisen, z. B. rund, oval, viereckig oder anders profiliert sein. Auch die Form der Gasaustrittsöffnungen kann den Erfordernissen entsprechend unterschiedlich ausfallen. Neben kreisförmigen kommen z. B. schlitzförmige Austrittsöffnungen zum Einsatz, die sich quer oder parallel zur Längsachse des Rohrs erstrecken können. Statt einer Reihe kleiner Löcher oder Schlitze kann ein einziger langer Austrittsschlitz benutzt werden.

Um den im Vergleich zu vorbekannten Einrichtungen zum Verschweißen mit Heißluft ohnehin günstigeren Wirkungsgrad weiter zu verbessern, ist es vorteilhaft, den Rohrkörper mit einer Wärmedämmung zu versehen, die entsprechende Löcher für den Gasaustritt besitzt.

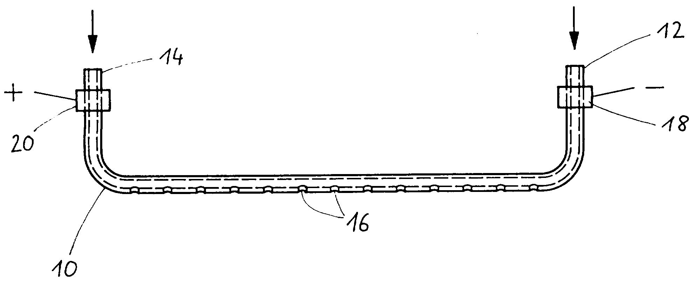

Nachstehend wird anhand der beigefügten Zeichnung näher auf ein Ausführungsbeispiel der Erfindung eingegangen.

In der Zeichnung ist ein im wesentlichen U-förmiger Rohrkörper 10 aus einem Heizleitermetall dargestellt, dessen beide Enden 12, 14 an ein Gebläse angeschlossen sind, das Luft oder ein anderes Gas oder Gasgemisch in den Rohrkörper 10 bläst. Der Querschnitt des Rohrkörpers 10 ist im Beispielsfall rund. Der Außendurchmesser beträgt 5 mm, die Wandstärke 1 mm.

Der U-förmige Rohrkörper 10 weist in seinem geraden Stegbereich eine Vielzahl von Auslaßöffnungen 16 auf, durch welche die eingeblasene Luft auf eine in einem bestimmten Abstand an dem Rohrkörper in dessen Längsrichtung vorbeigeführte Kunststoffolie (nicht gezeigt) ausströmen kann. An seinen Schenkeln sind im Bereich der Rohrenden 12, 14 elektrische Anschlüsse 18, 20 angebracht, die es gestatten, bei niedriger Spannung von z. B. etwa 10 - 40 Volt einen elektrischen Strom durch den Rohrkörper zu leiten. Dadurch erhitzt er sich, so daß auch die durchströmende Luft erhitzt wird. Je nach Rohrgeometrie, Material und Stärke der zu verschweißenden Kunststoffolie und Vorschubgeschwindigkeit, sollte der Rohrkörper 10 möglichst konstant auf einem bestimmten Temperaturniveau gehalten werden, um ein gleichmäßiges Verschweißen der Kunststoffolie zu gewährleisten.

Möglich wird dies durch die Funktion des Rohrkörpers als Temperaturfühler und elektronische Regelungen, welche seine Temperatur und Temperaturänderungen sehr genau erfassen und dementsprechend die Stromstärke zum Beheizen des Rohrkörpers 10 variieren.

Je nach Verwendungszweck kann statt eines beidseitig offenen Rohrkörpers auch ein einseitig geschlossener Rohrkörper zum Einsatz kommen, oder das Rohr kann als ein geschlossener Kreis mit einer oder mehreren seitlichen Einlaßöffnungen ausgebildet sein. Für die Auslaßöffnungen 16, die in einem Abstand von ungefähr 5 mm zueinander angeordnet sind, aber auch unterschiedliche, z. B. in einer Richtung zunehmend kleinere Abstände haben könnten, haben sich Schlitzbreiten bzw. Bohrungsdurchmesser von ungefähr 1 mm für Verpackungsmaschinen als besonders geeignet erwiesen. Wirkungsgradverbesserungen der Vorrichtungen lassen sich durch eine Wärmedämmung (nicht gezeigt) erzielen, die den Rohrkörper 10 umfaßt, wobei jedoch die Auslaßöffnungen 16 frei bleiben.

## Patentansprüche

1. Verfahren zum Verschweißen von Kunststoffolien mit Heißgas, das in einem rohrförmigen Heizleiter durch elektrischen Strom erwärmt und durch eine oder mehrere Auslaßöffnungen (16) in der Umfangswand eines Rohrkörpers (10) auf eine in einem bestimmten Abstand zum Rohrkörper (10) angeordnete Kunststoffolie geblasen wird, **dadurch gekennzeichnet,** daß der elektrische Strom durch den mit einer oder mehreren Auslaßöffnungen (16) versehenen Rohrkörper (10) geleitet wird und die Stromstärke in Abhängigkeit von dessen sich mit der Temperatur ändernden Widerstand gesteuert wird, wobei der Rohrkörper (10) als Temperaturfühler dient.

2. Verfahren nach Anspruch 1, **dadurch gekennzeichnet,** daß die Kunststoffolie an den Auslaßöffnungen (16) vorbeigeführt wird.

3. Verfahren nach Anspruch 1 oder 2, **dadurch gekennzeichnet,** daß das Gas pulsierend durch den Rohrkörper (10) geblasen wird.

4. Vorrichtung zur Durchführung des Verfahrens nach einem der Ansprüche 1 bis 3 mit einem über elektrische Anschlüsse (18, 20) an eine Stromquelle angeschlossenen und mit einem Gaseinlaß (bei 12, 14) versehenen, rohrförmigen Heizleiter sowie einer oder mehreren in der Umfangswand eines Rohrkörpers (10) angeordneten Auslaßöffnungen (16), **dadurch gekennzeichnet,** daß die elektrischen Anschlüsse (18, 20) an den Enden (12, 14) des mit einer oder mehreren Auslaßöffnungen (16) versehenen Rohrkörpers (10) angeordnet sind und die Stromstärke in Abhängigkeit von dessen sich mit der Temperatur ändernden elektrischen Widerstand steuerbar ist, wobei der Rohrkörper (10) einen Temperaturfühler bildet.

5. Vorrichtung nach Anspruch 4, **dadurch gekennzeichnet,** daß der Rohrkörper (10) beidseitige Gaseinlässe (bei 12, 14) aufweist.

6. Vorrichtung nach Anspruch 4 oder 5, **dadurch gekennzeichnet,** daß der Rohrkörper (10) einen geschlossenen Kreis bildet, der mit wenigstens einem Einlaß (bei 12, 14) versehen ist.

7. Vorrichtung nach einem der Ansprüche 4 bis 6, **dadurch gekennzeichnet,** daß die Auslaßöffnungen (16) in einem geraden Bereich des Rohrkörpers (10) in einer Reihe angeordnet sind.

8. Vorrichtung nach einem der Ansprüche 4 bis 7, **dadurch gekennzeichnet,** daß der Rohrkörper (10) einen kreisförmigen Querschnitt besitzt.

9. Vorrichtung nach einem der Ansprüche 4 bis 8, **dadurch gekennzeichnet,** daß die Auslaßöffnungen (16) im wesentlichen runde Löcher sind.

10. Vorrichtung nach einem der Ansprüche 4 bis 9, **dadurch gekennzeichnet,** daß die Auslaßöffnungen (16) Schlitze sind.

11. Vorrichtung nach einem der Ansprüche 4 bis 10, **dadurch gekennzeichnet,** daß der Rohrkörper (10) von einer Wärmedämmung umgeben ist, die entsprechende Löcher (16) für den Gasaustritt aufweist.

## Claims

1. A process for welding plastic sheets with hot gas which is heated in a tubular heating conductor by means of electric current and blown through one or more opening outlets (16) in the circumferential wall of a tube body (10) against a plastic sheet disposed at a certain distance from the tube body (10), characterized in that the electric current is conducted through the tube body (10) provided with one or more outlet openings (16) and that the intensity of the current is controlled as a function of its resistance which changes with the temperature, wherein the tube body (10) serves as temperature sensor.

2. Process according to claim 1, characterized in that the plastic sheet is conveyed past the outlet openings (16).

3. Process according to claims 1 or 2, characterized in that the gas is blown through the tube body (10) in a pulsating manner.

4. Device for carrying out the process according to one of claims 1 to 3 with a tubular heating conductor that is connected to a current source and has a gas inlet (at 12, 14) and with one or more gas outlet openings (16) in the circumferential wall of a tube body (10), characterized in that the electrical connections (18, 20) are disposed at the ends (12, 14) of the tube body (10) provided with one or more outlet openings (16) and that the intensity of the current is controlled as a function of its electrical resistance which changes with the temperature, wherein the tube body (10) is a temperature sensor.

5. Device according to claim 4, characterized in that the tube body (10) has gas inlets on both sides (at 12, 14).

6. Device according to claim 4 or 5, characterized in that the tube body (10) constitutes a closed loop which is provided with at least one inlet (at 12, 14).

7. Device according to one of claims 4 to 6, characterized in that the outlet openings (16) are disposed in a row in a straight region of the tube body (10).

8. Device according to one of claims 4 to 7, characterized in that the tube body (10) has a circular cross section.

9. Device according to one of claims 4 to 8, characterized in that the outlet openings (16) are essentially round holes.

10. Device according to one of claims 4 to 9, characterized in that the outlet openings (16) are slots.

11. Device according to one of claims 4 to 10, characterized in that the tube body (10) is encompassed by a thermal insulation that has corresponding holes (16) for the gas to exit.

## Revendications

1. Procédé de soudage d'un film de matière plastique avec du gaz chaud soufflé par un conducteur chauffant, tubulaire, chauffé par du courant électrique, à travers un ou plusieurs orifices de sortie (16) dans la paroi périphérique d'un corps tubulaire (10), sur un film de matière plastique situé à une distance définie par rapport au corps tubulaire (10),
caractérisé en ce que
le courant électrique passe par le corps tubulaire (10) muni d'un ou plusieurs orifices de sortie (16) et l'intensité du courant électrique est commandée en fonction de sa résistance variant avec la température, le corps tubulaire (10) servant de capteur de température.

2. Procédé selon la revendication 1,
caractérisé en ce que
le film de matière plastique passe devant les orifices de sortie (16).

3. Procédé selon l'une quelconque des revendications 1 ou 2,
caractérisé en ce que
le gaz est soufflé de manière pulsée à travers le corps tubulaire (10).

4. Dispositif pour la mise en oeuvre du procédé selon l'une quelconque des revendications 1 à 3,
comportant un conducteur chauffant tubulaire, muni d'une entrée de gaz (en 12, 14) reliée par des branchements électriques (18, 20) à une source de courant, ce conducteur chauffant ayant un ou plusieurs orifices de sortie (16), prévus dans la paroi d'enveloppe d'un corps tubulaire (10),
caractérisé en ce que
les branchements électriques (18, 20) sont prévus aux extrémités (12, 14) du corps tubulaire (10) muni d'un ou plusieurs orifices de sortie (16), et l'intensité du courant électrique est commandée en fonction de la résistance électrique de celui-ci variant avec la température, le corps tubulaire (10) servant de capteur de température.

5. Dispositif selon la revendication 4,
caractérisé en ce que
le corps tubulaire (10) comporte des entrées de gaz au niveau de ses deux cotés (en 12, 14).

6. Dispositif selon l'une quelconque des revendications 4 ou 5,
caractérisé en ce que
le corps tubulaire (10) forme un circuit fermé muni d'au moins une entrée (en 12, 14).

7. Dispositif selon l'une quelconque des revendications 4 à 6,
caractérisé en ce que
les orifices de sortie (16) sont prévus en ligne dans une zone droite du corps tubulaire (10).

8. Dispositif selon l'une quelconque des revendications 4 à 7,
caractérisé en ce que
le corps tubulaire (10) présente une section circulaire.

9. Dispositif selon l'une quelconque des revendications 4 à 8,
caractérisé en ce que
les orifices de sortie (16) sont des trous essentiellement circulaires.

10. Dispositif selon l'une quelconque des revendications 4 à 9,
caractérisé en ce que
les orifices de sortie (16) sont des fentes.

11. Dispositif selon l'une quelconque des revendications 4 à 10,
caractérisé en ce que
le corps tubulaire (10) est entouré d'une isolation thermique munie de trous (16) appropriés pour la sortie du gaz.
